# FASCICULE DE BREVET EUROPEEN

(11) **EP 1 569 816 B1**
(45) Date de publication et mention de la délivrance du brevet: **15.08.2007**
(21) Numéro de dépôt: 03796157.0
(22) Date de dépôt: 04.12.2003
(51) Int. Cl.: B60N 2/015, B60N 2/30, B60N 2/36, B60N 3/02, A47C 7/62

(54) **SIEGE COMPORTANT UNE POIGNEE DE MANIPULATION**
SITZ MIT TRAGEGRIFF
SEAT COMPRISING AN OPERATING HANDLE

(30) Priorité: 10.12.2002 FR 0215584
(43) Date de publication de la demande: 07.09.2005
(73) Titulaire: RENAULT s.a.s., 92100 Boulogne Billancourt (FR)
(72) Inventeur: LERICHE, Yann, F-78180 Montigny Le Bretonneux (FR)
(86) Numéro de dépôt international: PCT/FR2003/003586
(87) Numéro de publication internationale: WO 2004/062960

(56) Documents cités:
- DE-C- 3 737 879
- US-A- 3 566 436
- US-A- 3 695 689
- US-A- 5 975 612
- US-A- 6 142 561

## Description

L'invention concerne un siège comportant une poignée de manipulation et plus particulièrement un siège comportant une garniture de mousse de faible épaisseur.

Des poignées de manipulation pour siège sont par exemple utilisées pour les sièges escamotables.

Ces sièges comprennent notamment un support rigide et une garniture de mousse solidaire du support. On connaît déjà des poignées de manipulation pour dossier de siège. Ces poignées sont en matériau rigide en forme de coque et sont formées dans le support, de sorte que la coque fait saillie vers la garniture de mousse en direction du dos de la personne assise. Il en résulte une zone d'inconfort pour la personne, le dossier étant plus rigide au niveau de la poignée.

L'invention vise à palier à ces inconvénients en proposant un siège comportant une poignée, qui, lorsqu'elle n'est pas utilisée, ne provoque pas une zone d'inconfort pour la personne assise. Cette poignée peut être disposée sur le dossier et/ou l'assise du siège.

A cet effet, l'objet de l'invention concerne un siège comportant une poignée de manipulation, ledit siège comportant un support en matériau rigide et une garniture souple maintenue sur le support par une housse, ledit support comprenant une ouverture dont au moins un bord de ladite ouverture formant un bord de préhension pour la poignée (siège du type divulgué par exemple dans US-A-6 142 561)*,* caractérisé en ce que le support comprend un volet mobile entre une position fermée dans laquelle il est situé sensiblement dans le prolongement du support, et une position ouverte dans laquelle ledit au moins un bord de préhension est accessible. Ainsi, en position fermée, lorsque la poignée n'est pas utilisée, le volet est situé dans le prolongement du support et ne fait pas saillie vers la garniture, de manière que la personne assise ne soit pas incommodée par la présence du volet.

Notamment, le volet peut obturer l'ouverture en position fermée.

Dans une variante, en position ouverte, le volet est dirigé vers la garniture. Il suffit de pousser le volet vers la garniture, celle-ci est alors comprimée et permet de libérer un accès entre la garniture et le support afin de saisir le bord de l'ouverture du support et de manipuler le siège.

Dans une variante, le volet est mobile autour d'un axe de rotation solidaire d'un bord de l'ouverture autre que le(s) bord(s) formant bord(s) de préhension.

Le volet peut comporter un moyen de maintien le maintenant en position fermée. L'ouverture peut ainsi être obturée en permanence lorsque la poignée n'est pas utilisée, ce qui permet d'éviter une dégradation de la garniture et procure un effet esthétique.

Le moyen de maintien peut comprendre un ressort enroulé autour de l'axe de rotation du volet. Une simple poussée de la main permet alors de déplacer le volet vers la garniture.

Encore dans une variante, la garniture souple comporte un élément de renfort souple disposé sensiblement en regard de l'ouverture du support. Ainsi, lorsque le volet s'ouvre vers la garniture jusqu'à venir en contact avec elle, cette dernière est protégée du frottement du volet. Cet élément de renfort permet par ailleurs de protéger la garniture contre les salissures ou les dégradations lorsque le volet est ouvert, que celui-ci s'ouvre vers la garniture ou non. Il procure également un effet esthétique en cachant l'aspect de la garniture à l'utilisateur.

Dans une autre variante, la garniture souple présente une épaisseur amoindrie dans sa partie sensiblement en regard de l'ouverture du support. Un espace est ainsi ménagé en permanence entre la garniture et le support, facilitant l'ouverture du volet lorsque ce dernier est dirigé vers la garniture et l'accès du bord de préhension.

Dans une autre variante, la garniture souple présente une épaisseur plus importante dans sa partie sensiblement en regard de l'ouverture du support.

L'ouverture et le volet peuvent être disposés sensiblement au niveau des lombaires d'un occupant du siège. Une épaisseur plus importante de la garniture à ce niveau permet alors un meilleur soutien du dos de la personne assise et notamment un meilleur appui lombaire.

Le(s) bord(s) de l'ouverture formant le(s) bord(s) de préhension pour la poignée peut (peuvent) présenter une épaisseur plus importante que le support afin d'améliorer la prise en main au niveau du bord de préhension.

L'invention est maintenant décrite en référence aux dessins annexés, non limitatifs, dans lesquels :
- la figure 1 est une vue en coupe d'un siège comportant un dossier avec une poignée selon un premier mode de réalisation de l'invention ;
- la figure 2 est une vue en coupe au niveau de la poignée d'un siège selon un deuxième mode de réalisation de l'invention ;
- la figure 3 représente la poignée de la figure 2 lors de son utilisation.

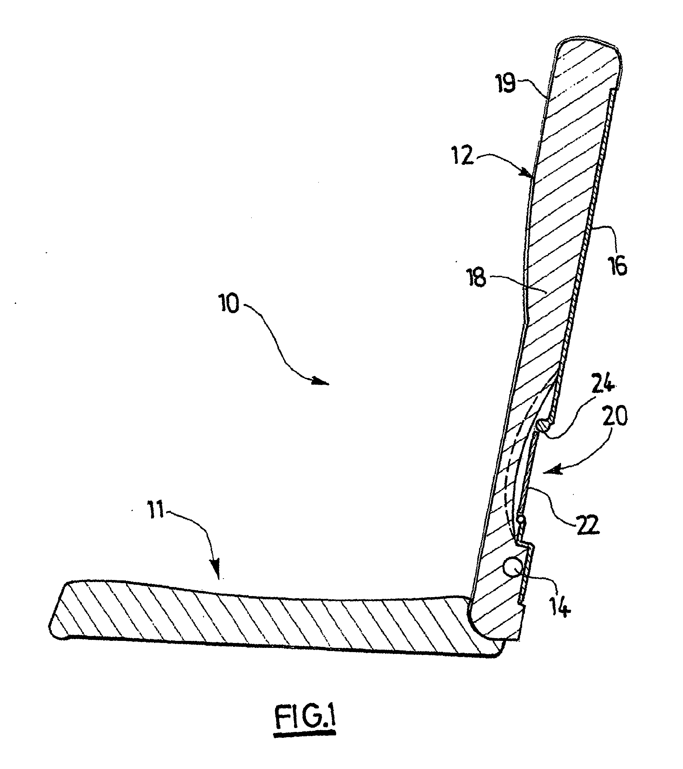

Un siège 10 comporte une assise 11 et un dossier 12. Ce dossier est inclinable autour d'un axe de rotation 14 (figure 1).

Dans le mode de réalisation décrit, la poignée est disposée sur le dossier du siège.

Le dossier 12 comporte un support 16 en matériau rigide et une garniture souple 18 maintenue sur le support 16 au moyen d'une housse 19. La garniture 18 n'est donc pas solidaire du support et peut en être écartée. Elle est par exemple en mousse pleine ou alvéolée.

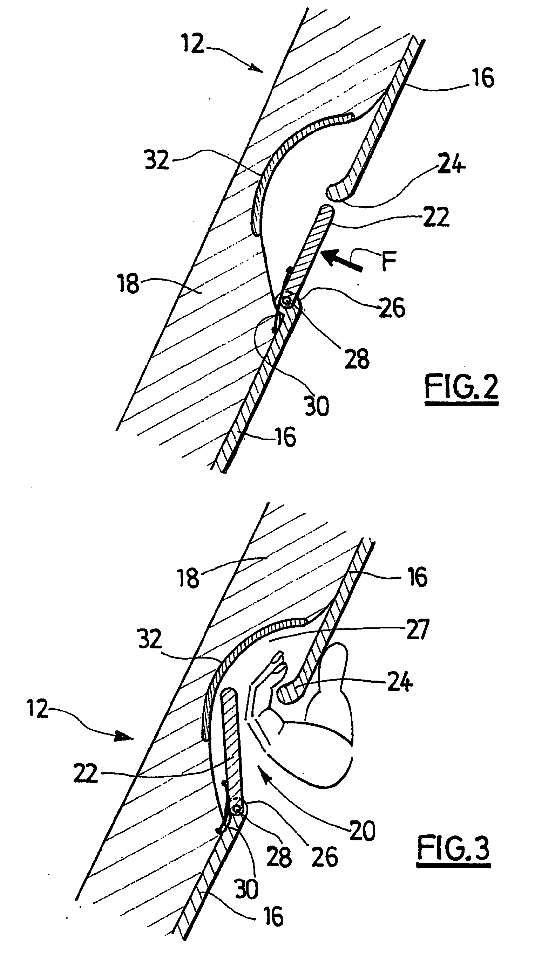

Le support 16 présente une ouverture 20 obturée par un volet mobile 22. L'ouverture 20 est suffisamment grande pour permettre l'introduction de la main ou de plusieurs doigts. Le volet 22 présente une forme sensiblement complémentaire de celle de l'ouverture 20 et est constitué de préférence de la même matière que le support 16. En position fermée, le volet est disposé sensiblement dans le prolongement du support, tel que représenté figure 2, de manière qu'aucune partie rigide ne fait saillie vers la garniture et le dos d'un occupant.

Le bord supérieur 24 de l'ouverture 20, dirigé vers le sommet du dossier 12, forme un bord de préhension pour les doigts d'un usager tel que représenté sur la figure 3 : l'usager peut saisir le bord supérieur 24 entre le pouce et d'autres doigts. L'extrémité de ce bord supérieur 24 peut présenter une épaisseur légèrement plus importante par rapport au reste du support afin de faciliter sa préhension.

Un des bords du volet 22 est relié au bord inférieur 26 de l'ouverture, opposé au bord supérieur 24, par un axe de rotation 28, de sorte que le volet 22 peut être basculé vers la garniture du siège de façon à la comprimer. La compression de la garniture 18 est représentée par un trait discontinu sur la figure 1. L'ouverture 20 est alors libre et un espace libre 27 est formé entre la garniture 18 et le support 16 et permet l'introduction de la main ou de plusieurs doigts.

Un ressort 30 enroulé autour de l'axe de rotation 28 permet de maintenir le volet 22 en position fermée et forme un moyen de maintien. On peut prévoir également une butée ou d'autres moyens pour empêcher le volet de basculer du côté opposé à la garniture. En exerçant une poussée à l'encontre de la force de rappel du ressort, le volet peut ainsi être ouvert donnant accès à l'ouverture et au bord de préhension. Cette poussée est symbolisée par la flèche F sur la figure 2.

Dans le mode de réalisation représenté sur les figures 2 et 3, la garniture 18 comporte un élément de renfort souple 32 solidaire afin d'éviter une éventuelle détérioration et de cacher la garniture. A cet effet, cet élément 32 s'étend sensiblement sur une surface au moins égale à la surface de l'ouverture 20. Il peut cependant s'étendre sur une surface plus importante de la garniture 18. Cet élément de renfort souple 32 est par exemple un morceau de feutrine collé sur la surface de la garniture. D'autres matériaux souples résistants au frottement et aptes à être fixés sur une garniture peuvent également être utilisés.

Lors de l'ouverture du volet 22, ce dernier vient en appui contre l'élément de renfort souple 32 et comprime légèrement la garniture formant l'espace libre 27 et permettant l'introduction des doigts et la saisie du bord de préhension (figures 1 et 3).

Dans les modes de réalisation décrits, la partie de la garniture 18 en regard de l'ouverture présente une épaisseur plus faible de façon à former une cavité en regard de l'ouverture. Cette disposition permet de limiter la compression de la garniture et de faciliter l'ouverture du volet.

Toutefois, la garniture peut présenter une épaisseur normale, sans amincissement ou sur-épaisseur, au niveau de l'ouverture sans pour autant empêcher l'ouverture du volet. Ce dernier est alors en contact avec la garniture en position fermée.

Dans les modes de réalisation représentés, la poignée est située sensiblement au niveau des lombaires de l'occupant du siège.

Bien entendu, on peut envisager d'autres modes d'ouverture du volet afin de permettre l'accès au bord de préhension. On peut également prévoir d'autres moyens de maintien du volet en position fermée. Le bord de préhension peut également être formé par n'importe quel bord de l'ouverture.

La poignée décrite, ainsi que les variantes envisagées, peuvent également être disposées de manière similaire sur l'assise d'un siège, et plus particulièrement sur le support de l'assise.

## Revendications

1. Siège (10) comportant une poignée de manipulation, ledit siège comportant un support (16) en matériau rigide et une garniture souple (18) maintenue sur le support par une housse (19), ledit support (16) comprenant une ouverture (20) dont au moins un bord (24) forme un bord de préhension pour la poignée, **caractérisé en ce que** le support (16) comprend un volet (22) mobile entre une position fermée dans laquelle il est situé sensiblement dans le prolongement du support (16), et une position ouverte dans laquelle ledit au moins un bord de préhension (24) est accessible.

2. Siège selon la revendication 1, **caractérisé en ce que** le volet (22) obture l'ouverture (20) en position fermée.

3. Siège selon la revendication 1 ou 2, **caractérisé en ce que** le volet (22) est mobile autour d'un axe de rotation (28) solidaire d'un bord de l'ouverture (20) autre que le(s) bord(s) formant bord(s) de préhension.

4. Siège selon la revendication 3, **caractérisé en ce que**, en position ouverte, le volet (22) est dirigé vers la garniture (18).

5. Siège selon l'une des revendications 1 à 4, **caractérisé en ce qu'**il comprend un moyen de maintien (30) maintenant le volet (22) en position fermée.

6. Siège selon les revendications 4 ou 5 quand elles dépendent de la revendication 3, **caractérisé en ce que** le moyen de maintien (30) comprend un ressort enroulé autour de l'axe de rotation (28) du volet.

7. Siège selon l'une des revendications 1 à 6, **caractérisé en ce que** la garniture souple (18) comporte un élément de renfort souple (32) disposé sensiblement en regard de l'ouverture (20) du support (16).

8. Siège selon l'une des revendications 1 à 7, **caractérisé en ce que** la garniture souple (18) présente une épaisseur amoindrie dans sa partie sensiblement en regard de l'ouverture (20) du support (16).

9. Siège selon l'une des revendications 1 à 7, **caractérisé en ce que** la garniture souple (18) présente une épaisseur plus importante dans sa partie sensiblement en regard de l'ouverture (20) du support (16).

10. Siège selon l'une des revendications 1 à 9, **caractérisé en ce que** l'ouverture (20) et le volet [22] sont disposés sensiblement au niveau des lombaires d'un occupant du siège.

11. Siège selon l'une des revendications 1 à 10, **caractérisé en ce que** le(s) bord(s) de l'ouverture (20) formant le(s) bord(s) de préhension pour la poignée présente(nt) une épaisseur plus importante que le support (16).

## Claims

1. Seat (10) comprising an operating handle, said seat comprising a support (16) made of rigid material and flexible upholstery (18) held on the support by a seat cover (19), and said support (16) comprising an opening (20), at least one edge (24) of which forms a handgrip edge for the handle, which seat is **characterized in that** the support (16) comprises a flap (22) that is moveable between a closed position in which it is effectively coplanar with the support (16), and an open position in which said at least one handgrip edge (24) is accessible.

2. Seat according to Claim 1, **characterized in that** the flap (22) closes the opening (20) when in the closed position.

3. Seat according to Claim 1 or 2, **characterized in that** the flap (22) is moveable about a rotation pin (28) connected to an edge of the opening (20) other than the edge(s) forming the handgrip edge(s).

4. Seat according to Claim 3, **characterized in that** in the open position the flap (22) is directed towards the upholstery (18).

5. Seat according to one of Claims 1 to 4, **characterized in that** it comprises a retaining means (30) that keeps the flap (22) in the closed position.

6. Seat according to Claim 4 or 5 where these are dependent on Claim 3, **characterized in that** the retaining means (30) comprises a spring wrapped around the rotation pin (28) of the flap.

7. Seat according to one of Claims 1 to 6, **characterized in that** the flexible upholstery (18) comprises a flexible reinforcing element (32) situated approximately in front of the opening (20) of the support (16).

8. Seat according to one of Claims 1 to 7, **characterized in that** the flexible upholstery (18) has a thinner part approximately in front of the opening (20) of the support (16).

9. Seat according to one of Claims 1 to 7, **characterized in that** the flexible upholstery (18) has a thicker part approximately in front of the opening (20) of the support (16).

10. Seat according to one of Claims 1 to 9, **characterized in that** the opening (20) and the flap (22) are located in the approximate region of the lumbar vertebrae of an occupant of the seat.

11. Seat according to one of Claims 1 to 10, **characterized in that** the edge(s) of the opening (20) forming the handgrip edge(s) for the handle is/are thicker than the support (16).

## Patentansprüche

1. Sitz (10) mit einem Bedienungsgriff, wobei der Sitz eine Stütze (16) aus starrem Material und einen weichen Belag (18) umfasst, der durch einen Bezug (19) an der Stütze gehalten wird, wobei die Stütze (16) eine Öffnung (20) aufweist, von der mindestens ein Rand (24) einen Greifrand für den Griff bildet, **dadurch gekennzeichnet, dass** die Stütze (16) eine Klappe (22) aufweist, die zwischen einer geschlossenen Position, in der sie im Wesentlichen in der Verlängerung der Stütze (16) angeordnet ist, und einer offenen Position, in der mindestens ein Greifrand (24) zugänglich ist, beweglich ist.

2. Sitz nach Anspruch 1, **dadurch gekennzeichnet, dass** die Klappe (22) die Öffnung (20) in der geschlossenen Position verdeckt.

3. Sitz nach Anspruch 1 oder 2, **dadurch gekennzeichnet, dass** die Klappe (22) um eine Rotationsachse (28) beweglich ist, die fest mit einem Rand der Öffnung (20) verbunden ist, bei dem es sich nicht um den/die Rand/Ränder handelt, der/die den/die Greifrand/ränder bildet/n.

4. Sitz nach Anspruch 3, **dadurch gekennzeichnet, dass** die Klappe (22) in der offenen Position zum Belag (18) gerichtet ist.

5. Sitz nach einem der Ansprüche 1 bis 4, **dadurch gekennzeichnet, dass** er ein Haltemittel (30) aufweist, das die Klappe (22) in der geschlossenen Position hält.

6. Sitz nach Anspruch 4 oder 5, wenn sie von Anspruch 3 abhängen, **dadurch gekennzeichnet, dass** das Haltemittel (30) eine um die Rotationsachse (28) der Klappe gewickelte Feder umfasst.

7. Sitz nach einem der Ansprüche 1 bis 6, **dadurch gekennzeichnet, dass** der weiche Belag (18) ein weiches Verstärkungselement (32) umfasst, das im Wesentlichen gegenüber der Öffnung (20) der Stütze (16) angeordnet ist.

8. Sitz nach einem der Ansprüche 1 bis 7, **dadurch gekennzeichnet, dass** der weiche Belag (18) an seinem Teil, der im Wesentlichen gegenüber der Öffnung (20) der Stütze (16) angeordnet ist, weniger dick ist.

9. Sitz nach einem der Ansprüche 1 bis 7, **dadurch gekennzeichnet, dass** der weiche Belag (18) an seinem Teil, der im Wesentlichen gegenüber der Öffnung (20) der Stütze (16) angeordnet ist, dicker ist.

10. Sitz nach einem der Ansprüche 1 bis 9, **dadurch gekennzeichnet, dass** die Öffnung (20) und die Klappe (22) im Wesentlichen in Lendenhöhe eines Sitzenden angeordnet sind.

11. Sitz nach einem der Ansprüche 1 bis 10, **dadurch gekennzeichnet, dass** der/die Rand/Ränder der Öffnung (20), der/die den/die Greifrand/ränder für den Griff bildet/n, dicker als die Stütze (16) ist/sind.
